# EUROPÄISCHE PATENTANMELDUNG

(11) **EP 2 075 098 A2**
(43) Veröffentlichungstag der Anmeldung: **01.07.2009**
(21) Anmeldenummer: 08171247.3
(22) Anmeldetag: 10.12.2008
(51) Int. Cl.: B25J 9/16

(54) **Industrieroboter und Verfahren zum Steuern eines Industrieroboters**

(30) Priorität: 21.12.2007 DE 102007062109
(71) Anmelder: KUKA Roboter GmbH, 86165 Augsburg (DE)
(72) Erfinder: Rolke, Rajko, 86163 Augsburg (DE); Demir Halim, 86444 Affing-Bergen (DE)
(74) Vertreter: Hassa, Oliver Michael

(57) **Zusammenfassung**

Die Erfindung betrifft einen Industrieroboter (R) und ein Verfahren zum Steuern eines Industrieroboters (R). Im Rahmen des Verfahrens wird ein Werkzeug (6) mittels des Industrieroboters (R) entlang einer Bahn bewegt. Das Werkzeug (6) bearbeitet während des Bewegens ein Werkstück (21a-21d). Während des Bewegens des Werkzeugs (6) entlang der Bahn wird eine optische Markierung (25, 27) am Werkstück (21a-21d) erkannt und aufgrund der erkannten optischen Markierung (25, 27) wird das Werkzeug (6) insbesondere mittels des Industrieroboters (R) angesteuert.

## Beschreibung

Die Erfindung betrifft einen Industrieroboter und ein Verfahren zum Steuern eines Industrieroboters.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Unter Verfahren zum Programmieren des Industrieroboters (Programmierverfahren) versteht man das planmäßige Vorgehen zur Erzeugung von Anwenderprogrammen.

Programmierverfahren lassen sich in direkte, indirekte und hybride Verfahren unterscheiden. Direkte Verfahren werden auch als On-line-Verfahren und indirekte Verfahren werden auch als Off-line-Verfahren bezeichnet. Hybride Verfahren stellen eine Kombination aus direkten und indirekten Verfahren dar. Zu den direkten Verfahren zählen die so genannte Teach-In-Programmierung und das Play-Back-Verfahren. Aufgrund der Programmierung führt der Industrieroboter eine gewollte Bewegung entlang einer vorbestimmten Bahn aus.

Führt der Industrieroboter die Bewegung aus, um z.B. eine Naht zu verschweißen, dann kann beispielsweise aufgrund von Toleranzen zu verschweißender Werkstücke oder Ungenauigkeiten in der Schweißstrahlführung die erzeugte Schweißnaht nicht zufriedenstellend sein. Um die Schweißnaht zu verbessern, kann z.B. ein in der DE 10 2004 001 168 A1 offenbartes Nahtführungssystem eingesetzt werden, das vor dem Schweißen die Soll-Ist-Abweichungen der Positionierung des Werkstücks untersucht und in Abhängigkeit von ermittelten Soll-Ist-Abweichungen die vorgegebene Schweißbahn korrigiert.

Die Aufgabe der Erfindung ist es, ein Verfahren zum Steuern eines Industrieroboters anzugeben, der für die Bearbeitung eines Werkstücks ein Werkzeug bewegt, wobei das Verfahren Vorraussetzungen für eine verbesserte Qualität der Bearbeitung schafft.

Eine weitere Aufgabe der vorliegenden Erfindung ist es, einen derart eingerichteten Industrieroboter anzugeben.

Die Aufgabe der Erfindung wird gelöst durch ein Verfahren zum Steuern eines Industrieroboters, aufweisend folgende Verfahrensschritte:
- Bewegen eines Werkzeugs mittels eines Industrieroboters entlang einer Bahn, wobei das Werkzeug während des Bewegens ein Werkstück bearbeitet,
- während des Bewegens des Werkzeugs entlang der Bahn, Erkennen einer optischen Markierung am Werkstück, und
- aufgrund der erkannten optischen Markierung, Ansteuern des Werkzeugs während des Bewegens insbesondere mittels des Industrieroboters.

Die Aufgabe der Erfindung wird auch gelöst durch einen Industrieroboter, aufweisend:
- einen Roboterarm, der mehrere bewegbare Achsen und eine Befestigungsvorrichtung aufweist, die eingerichtet ist, ein zum Bearbeiten eines Werkstücks vorgesehenes Werkzeug aufzunehmen und mittels der Achsen bewegbar ist, um das Werkzeug für das Bearbeiten des Werkstücks entlang einer Bahn zu bewegen, und
- einen Steuerrechner, der eingerichtet ist, die Achsen zu bewegen, damit das Werkzeug entlang der Bahn bewegt wird, wobei der Steuerrechner eingerichtet ist, aufgrund einer von einem optischen Sensor während des Bewegens des Werkzeugs erfassten optischen Markierung des Werkstücks das Werkzeug während des Bewegens anzusteuern.

Der erfindungsgemäße Industrieroboter ist eingerichtet, das erfindungsgemäße Verfahren durchzuführen. Der erfindungsgemäße Industrieroboter ist ferner eingerichtet, an seiner Befestigungsvorrichtung, die z.B. ein Flansch am Ende des Roboterarms ist, das Werkzeug aufzunehmen, um durch geeignetes Ansteuern der Achsen des Roboterarms das Werkzeug auf der Bahn zu bewegen, so dass das Werkzeug das Werkstück in gewünschter Weise bearbeiten kann. Die Bahn, auf der das Werkzeug während des Bearbeitens des Werkstücks bewegt, ist z.B. eine im Steuerrechner gespeicherte und vorab festgelegte Bahn. Die vorab festgelegte Bahn kann durch allgemein bekannte Verfahren, beispielsweise mittels Teach-In Programmierung, ermittelt werden.

Während des Bewegens des Werkzeugs soll dieses das Werkstück bearbeiten. Konventionelle Industrieroboter sind derart eingerichtet, das Werkzeug aufgrund einer vorab festgelegten Programmierung anzusteuern, z.B. ein und auszuschalten. Erfindungsgemäß wird das Werkzeug jedoch aufgrund während der Bewegung erfasster optischer Markierungen des zu bearbeitenden Werkstücks angesteuert. Dadurch ist eine flexiblere Bearbeitung des Werkstücks möglich und es können insbesondere Toleranzen verschiedener Werkstücke bei der Bearbeitung ausgeglichen werden.

Die optische Markierung kann z.B. bereits auf dem Werkstück vorhanden sein und ist beispielsweise eine Kerbe, eine Anreißlinie und/oder eine Bohrung in der Oberfläche des Werkstücks. Die optische Markierung kann aber auch eine zusätzliche, auf der Oberfläche des Werkstücks angeordnete optische Markierung sein. Die optische Markierung kann insbesondere einem speziellen Betriebsmodus des Werkzeugs zugeordnet sein. Wird z.B. eine bestimmte optische Markierung erfasst, dann wird automatisch das Werkzeug eingeschaltet. Wird eine, insbesondere von der optischen Markierung verschiedene weitere optische Markierung erfasst, dann wird automatisch das Werkzeug wieder ausgeschaltet.

Die optische Markierung kann mit verschieden artig ausgeführten optischen Sensoren erfasst werden. Gemäß einer Variante des erfindungsgemäßen Verfahrens bzw. Industrieroboters ist der optische Sensor am Roboterarm, an der Befestigungsvorrichtung oder am Werkzeug angeordnet. Insbesondere die Anordnung am Werkzeug hat den Vorteil, dass in relativ einfacher Weise der Bereich vor dem mittels des Industrieroboters bewegten Werkzeugs erfasst werden kann, so dass beim Erreichen der optischen Markierung in relativ einfacher Weise das Werkzeug angesteuert werden kann.

Gemäß einer Ausführungsform des erfindungsgemäßen Industrieroboters ist dessen Steuerrechner eingerichtet, aufgrund von vom optischen Sensor stammenden Daten und/oder Daten, die vom optischen Sender erzeugten Bildern zugeordnet sind, auszuwerten, um automatisch den Startpunkt und/oder den Endpunkt der Bahn auf dem Werkstück zu finden. Ist der optische Sensor am Werkzeug oder am Roboterarm angeordnet, so kann der Steuerrechner den Industrieroboter für das Finden des Startpunktes bewegen und, wenn der Startpunkt gefunden wurde, das Werkzeug sofort zum Startpunkt bewegen, um die Bearbeitung des Werkstücks zu beginnen.

Basiert die Bewegung des Werkzeugs auf der vorab festgelegten Bahn, dann kann der Steuerrechner des erfindungsgemäßen Industrieroboters derart eingerichtet sein, den Anfang der vorab definierten Bahn auf den gefundenen Startpunkt zu verschieben, um dann insbesondere das Werkzeug entlang der vorab festgelegten Bahn zu bewegen. Gemäß dieser Variante ermittelt der Industrieroboter also die Position des Werkstücks, um anschließend die Lage der vorab festgelegten Bahn entsprechend zu verschieben. Dadurch ist es möglich, den Anfang für die Bearbeitung zu finden, auch wenn das Werkstück nicht genau so positioniert ist, dass der Startpunkt mit dem Startpunkt der vorab festgelegten Bahn übereinstimmt.

Der erfindungsgemäße Industrieroboter kann z.B. vorgesehen sein, das Werkzeug entlang einer Naht des Werkstücks zu bewegen, um die Naht beispielsweise zu verschweißen oder zu verkleben. Die real am Werkstück verlaufende Naht kann aber, z.B. aufgrund von Toleranzen des Werkstücks, von der vorab festgelegten Bahn abweichen. Gemäß einer Ausführungsform des erfindungsgemäßen Industrieroboters ist dessen Steuerrechner eingerichtet, von vom optischen Sensor stammende, der Naht des Werkstücks zugeordneten Daten auszuwerten und die vorab festgelegte Bahn aufgrund der ausgewerteten Daten zu korrigieren, um das Werkzeug entlang der Naht zu bewegen. Gemäß dieser Variante erfasst der Sensor während der Bewegung des Werkzeugs die Naht, so dass der Steuerrechner eine Abweichung zwischen dem Verlauf der Naht und der vorab festgelegten Bahn erkennt und daraufhin die Ansteuerung der Achsen des Industrieroboters basierend auf der vorab festgelegten Bahn derart korrigiert, dass sich das Werkzeug entlang der Naht bewegt.

Nach einer weiteren Variante des erfindungsgemäßen Verfahrens bzw. Industrieroboters ist ein Bereich festgelegt, innerhalb dessen ein Abweichen von der vorab festgelegten Bahn während des Bewegens des Werkzeugs erlaubt ist. Diese Variante ist insbesondere dann vorteilhaft, wenn das Ende der Bewegung während der Bewegung aufgrund des ermittelten Endpunkts der Bahn auf dem Werkstück gefunden werden soll, um z.B. negative Auswirkungen eines nicht gefundenen Endpunktes zumindest zu verringern.

Ausführungsbeispiele der Erfindung sind exemplarisch in den beigefügten schematischen Zeichnungen dargestellt. Es zeigen:
- Fig. 1: einen Industrieroboter,
- Fig. 2: mehrere Werkstücke und
- Fig. 3: ein die Bewegung des Industrieroboters zum Bearbeiten der Werkstücke veranschaulichendes Flussdiagramm.

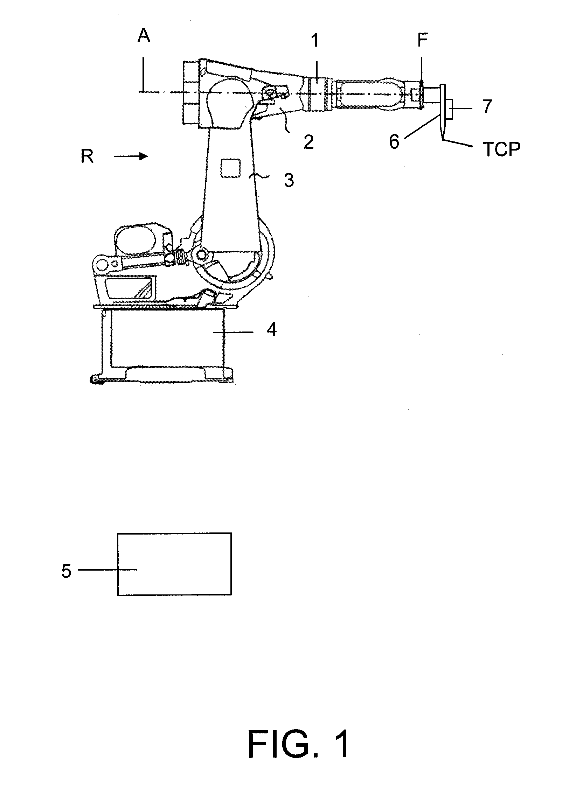

Die Fig. 1 zeigt einen Industrieroboter R mit einer Kinematik für Bewegungen in beispielsweise sechs Freiheitsgraden. Der Industrieroboter R weist in allgemein bekannter Weise einen Roboterarm mit sechs Bewegungsachsen, Gelenken 1, Hebeln 2, 3 und einem Flansch F auf. In der Fig. 1 ist nur eine der Bewegungsachsen mit dem Bezugszeichen A versehen und der Roboterarm ist auf einem Sockel 4 befestigt.

Jede der Bewegungsachsen A wird von einem nicht näher dargestellten Antrieb bewegt. Die Antriebe umfassen beispielsweise jeweils einen elektrischen Motor und Getriebe, wie es dem Fachmann allgemein bekannt ist.

Der Industrieroboter R weist ferner einen Steuerrechner 5 auf, der mit den Antrieben des Industrieroboters R in nicht dargestellter Weise verbunden ist. Auf dem Steuerrechner 5 läuft ein Rechenprogramm, das die Antriebe derart ansteuert, dass der Flansch F des Industrieroboters R eine vorgegebene Bewegung durchführt. Am Flansch F kann ein Werkzeug, wie z.B. ein in der Fig. 1 dargestelltes Schweißgerät 6 befestigt sein.

Im Falle des vorliegenden Ausführungsbeispiels ist am Schweißgerät 6 ein optischer Sensor 7 befestigt, der in nicht dargestellter Weise mit dem Steuerrechner 5 verbunden ist und die Umgebung in der Nähe des Schweißgerätes 6 scannen kann. Die diesem Scannen zugeordnete Daten werden dem Steuerrechner 5 übermittelt. Geeignete optische Sensoren 7 weisen z.B. CCD-Sensoren auf und/oder sind so genannte Lichtschnittsensoren.

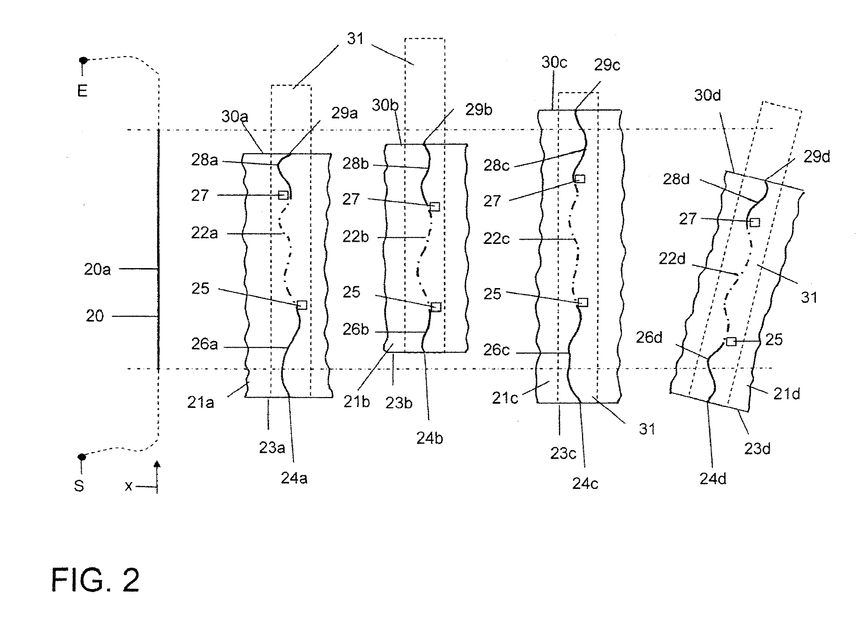

Im Falle des vorliegenden Ausführungsbeispiels ist das auf dem Steuerrechner 5 laufende Rechenprogramm derart eingerichtet, dass es die Antriebe des Industrieroboters R derart ansteuern kann, dass der Flansch F und somit das Schweißgerät 6, insbesondere dessen Tool Center Point TCP, automatisch auf einer vorab festgelegten und in der Fig. 2 gezeigten Bahn 20 bewegt wird. Die vorab festgelegte Bahn 20 wurde z.B. mittels Teach-In-Programmierung ermittelt. Die Bahn 20 beginnt an einem Startpunkt S und endet an einem Endpunkt E. Eine in der Fig. 2 mittels einer durchgezogenen Linie dargestellte Teilbahn 20a der Bahn 20 ist Schweißnähten 22a-22d zugeordnet, mittels derer Spalte von Werkstücken 21a-21d unter Zuhilfenahme des Industrieroboters R verschweißt werden sollen. Im Falle des vorliegenden Ausführungsbeispiels verläuft die Teilbahn 20a gerade in Richtung eines Pfeils x.

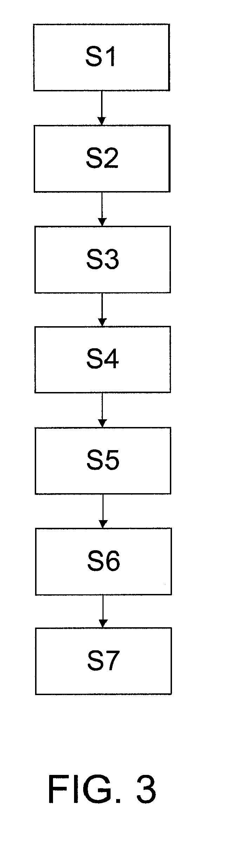

Aufgrund von z.B. Toleranzen der Werkstücke 21a-21d oder einer ungenauen Platzierung der Werkstücke 21a-21d deckt sich der Verlauf des jeweiligen Spalts der Werkstücke 21a-21d und deren erwarteter Anfang in der Regel nicht exakt mit der Teilbahn 20a der vorgegebenen Teilbahn 20a. Daher ist im Falle des vorliegenden Ausführungsbeispiels der Steuerrechner 5 derart ausgeführt, dass er aufgrund von dem Sensor 7 stammenden Daten während des Erstellens einer der Schweißnähte 22a-22d die Bewegung des Industrieroboters R der Lage des relevanten Werkstücks 21a-21d und dem realen Verlauf des relevanten Spaltes wie folgt anpasst. Dies ist in einem in der Fig. 3 gezeigten Flussdiagramm zusammengefasst:

Zunächst soll der Spalt des Werkstücks 21a verschweißt, also mit der Schweißnaht 22a versehen werden. Der Industrieroboter R befindet sich in einer Position, in der sich der TCP des Schweißgeräts 6 am Startpunkt S befindet. Das Werkstück 21a ist derart positioniert, dass sich der Anfang seines Spaltes in der Nähe des Startpunktes S befindet. Anschließend steuert der Steuerrechner 5 die Antriebe des Industrieroboters R derart an, so dass sich der Flansch F in einem vorgegebenen Bereich automatisch bewegt und gleichzeitig der Sensor 7 diesen Bereich abtastet. Aufgrund von diesem Abtasten zugeordneten und dem Steuerrechner 5 übermittelten Daten erkennt dieser mittels eines auf ihm laufenden Mustererkennungsprogramms eine erste Kante 23a des Werkstücks 21a und auch den Anfang 24a des Spaltes des Werkstücks 21a. Daraufhin steuert der Steuerrechner 5 die Antriebe des Industrieroboters R derart, dass der Tool Center Point TCP des Schweißgeräts 6 sich am Anfang 24a des Spaltes des Werkstücks 21a befindet, Schritt S1 des Flussdiagramms. Außerdem werden die dem Anfang 24a des Spalts zugeordneten Koordinaten mit den Koordinaten des Anfangs der vorab festgelegten Teilbahn 20a abgeglichen.

Befindet sich der Schweißbrenner 6 am Anfang 24a des Spalts des Werkstücks 21a, schaltet der Steuerrechner 5 automatisch das Schweißgerät 6 an und bewegt den Industrieroboter in x Richtung basierend auf der vorgegebenen Teilbahn 20a. Gleichzeitig tastet der Sensor 7 den Bereich vor dem Schweißgerät 6 ab und übermittelt die entsprechenden Daten dem Steuerrechner 5. Dieser wertet die Daten aus und erkennt aufgrund des Auswertens den realen Verlauf des Spaltes des Werkstücks 21a und korrigiert während der Bewegung des Industrieroboters R automatisch die Bewegung, so dass das Schweißgerät 6 dem Spalt folgt, Schritt S2 des Flussdiagramms.

Erreicht im Falle des vorliegenden Ausführungsbeispiels das Schweißgerät 6 eine erste optische Markierung 25, die z.B. auf der Oberfläche des Werkstücks 21a in der Nähe des Spalts angeordnet ist oder einer markanten Stelle des Werkstücks 21a zugeordnet ist, dann erkennt dies der Steuerrechner 5 aufgrund der ausgewerteten und vom Sensor 7 stammenden Daten und schaltet das Schweißgerät 6 automatisch ab. Somit entsteht eine sich vom Anfang 24a des Spaltes bis zur Markierung 25 erstreckende Teilschweißnaht 26a, Schritt S3 des Flussdiagramms.

Anschließend bewegt der Industrieroboter R das ausgeschaltete Schweißgerät 6 entlang des Spaltes aufgrund der vorab festgelegten Teilbahn 20a und korrigiert die Bewegung aufgrund der vom Sensor 7 stammenden Daten, die Bildern von der Oberfläche des Werkstücks 21a zugeordnet sind, so dass das ausgeschaltete Schweißgerät 6 entlang des Spaltes bewegt wird, Schritt S4 des Flussdiagramms.

Entdeckt der Steuerrechner 5 aufgrund der vom Sensor 7 stammenden Daten eine zweite optische Markierung 27, die z.B. auf der Oberfläche des Werkstücks 21a in der Nähe des Spalts angeordnet ist oder einer markanten Stelle des Werkstücks 21a zugeordnet ist, dann schaltet der Steuerrechner 5 das Schweißgerät 6 automatisch wieder an, Schritt S5 des Flussdiagramms, und bewegt das angeschaltete Schweißgerät 6 mittels des Industrieroboters R entlang des Spaltes aufgrund der vorab festgelegten Teilbahn 20a. Außerdem korrigiert der Steuerrechner 5 die Bewegung aufgrund der vom Sensor 7 stammenden Daten, so dass das angeschaltete Schweißgerät 6 weiter entlang des Spaltes bewegt wird, Schritt S6 des Flussdiagramms.

Erreicht das Schweißgerät 6 das Ende 29a des Spaltes des Werkstücks 21a, dann schaltet der Steuerrechner 5 automatisch das Schweißgerät 6 wieder ab, so dass eine Teilschweißnaht 28a der Schweißnaht 22a entsteht, und bewegt den Industrieroboter R mit ausgeschaltetem Schweißgerät 6 an den Endpunkt E, Schritt S7 des Flussdiagramms. Im Falle des vorliegenden Ausführungsbeispiels erkennt der Steuerrechner 5 das Ende 29a des Spalts durch Auswerten der vom Sensor 7 stammenden Daten und insbesondere durch Erkennen einer zweiten Kante 30a des Werkstücks 21a.

Im Falle des vorliegenden Ausführungsbeispiels bewegt der Industrieroboter R das Schweißgerät 6 basierend auf der vorgegebenen Bahn 20 und insbesondere aufgrund der vorgegebene Teilbahn 20a. Aufgrund des Verlaufs des Spaltes bedingte Abweichungen von dieser Teilbahn 20a rechtwinklig zur x-Richtung werden aufgrund der ausgewerteten Daten des Sensors 7 während der Bewegung korrigiert. Aus Sicherheitsgründen ist es im Falle des vorliegenden Ausführungsbeispiels vorgesehen, dass Abweichungen senkrecht zur x-Richtung nur innerhalb eines vorgegebenen Bereichs 31 durchgeführt werden dürfen.

Um unter Umständen negativen Auswirkungen für den Fall vorzubeugen, dass der Steuerrechner 5 das Ende 29a des Spaltes nicht erkennt, ist es im Falle des vorliegenden Ausführungsbeispiels vorgesehen, dass der Bereich 31 in x-Richtung ebenfalls beschränkt ist und der Industrieroboter R automatisch das Schweißgerät 6 ausschaltet und das Schweißgerät 6 zum Endpunkt E bewegt, wenn das Schweißgerät 6 den Bereich 31 verlässt. Die Ausdehnung des Bereichs 31 in x-Richtung ist abhängig von der Ausdehnung der Teilbahn 20a in x-Richtung.

Im Falle des vorliegenden Ausführungsbeispiels entspricht die Ausdehnung des Spalts des Werkstücks 21a in x-Richtung der Länge der Teilbahn 20a.

Die Ausdehnung des Spaltes des Werkstücks 21b in x-Richtung ist dagegen im Falle des vorliegenden Ausführungsbeispiels kleiner als die Länge der Teilbahn 20a.

Um die Schweißnaht 22b zu erzeugen, steuert der Steuerrechner 5 die Antriebe des Industrieroboters R derart an, so dass sich der Flansch F in einem vorgegebenen Bereich automatisch bewegt und gleichzeitig der Sensor 7 diesen Bereich abtastet, um eine erste Kante 23b und somit den Anfang 24b des Spaltes des Werkstücks 21b zu erkennen und das Schweißgerät 6 an den Anfang 24b des Spaltes heranzuführen.

Anschließend schaltet der Steuerrechner 5 automatisch das Schweißgerät 6 an und bewegt den Industrieroboter R entlang des Spaltes basierend auf der vorgegebenen Teilbahn 20a und den ausgewerteten Daten des Sensors 7 während der Bewegung.

Erreicht das Schweißgerät 6 wieder die erste optische Markierung 25, die z.B. auf der Oberfläche des Werkstücks 21b in der Nähe des Spalts angeordnet ist oder einer markanten Stelle des Werkstücks 21b zugeordnet ist, dann erkennt dies der Steuerrechner 5 aufgrund der ausgewerteten und vom Sensor 7 stammenden Daten und schaltet das Schweißgerät 6 automatisch ab. Somit entsteht eine sich vom Anfang 24b des Spaltes bis zur Markierung 25 erstreckende Teilschweißnaht 26b.

Anschließend bewegt der Industrieroboter R das ausgeschaltete Schweißgerät 6 entlang des Spaltes aufgrund der vorab festgelegten Teilbahn 20a und korrigiert die Bewegung aufgrund der vom Sensor 7 stammenden Daten, bis das Schweißgerät 6 die zweite optische Markierung 27 erreicht, um das Schweißgerät 6 automatisch wieder anzuschalten.

Entdeckt der Steuerrechner 5 aufgrund der vom Sensor 7 stammenden Daten die zweite optische Markierung 27, dann schaltet der Steuerrechner 5 das Schweißgerät 6 automatisch wieder an und bewegt das angeschaltete Schweißgerät 6 weiter entlang des Spaltes, bis der Steuerrechner 5 aufgrund der Daten des Sensors 7 die zweite Kante 30b des Werkstücks 21b erkennt. Daraufhin schaltet der Industrieroboter R das Schweißgerät 6 wieder ab, so dass eine Teilschweißnaht 28b der Schweißnaht 22b entsteht, und bewegt den Industrieroboter R mit ausgeschaltetem Schweißgerät 6 an den Endpunkt E.

Im Falle des Werkstücks 21c ist der Spalt in x-Richtung länger als die Teilbahn 20a. Da jedoch die Ausdehnung des Spaltes des Werkstücks 21c in x-Richtung innerhalb des Bereiches 31 liegt, kann der Industrieroboter R die Schweißnaht 22c entsprechend der Schweißnähte 22a, 22b erzeugen und die Kante 30c und somit das Ende 29c des Spaltes entsprechend den obenstehend beschriebenen Ausführungsbeispielen entdecken.

Auch für dieses Ausführungsbeispiel wird der Anfang 24c des Spaltes des Werkstücks 21c mittels der vom Sensor 7 aufgenommenen Daten und der Kante 23c des Werkstücks 21c ermittelt. Des Weiteren werden die Teilschweißnähte 26c, 28c aufgrund von optischen Markern 25, 27 des Werkstücks 21c erzeugt.

Die Werkstücke 21a-21c der obenstehend beschriebenen Ausführungsbeispiele sind derart ausgerichtet, dass deren Spalte in x-Richtung verlaufen. Im Falle des Werkstücks 21d verläuft der Spalt jedoch in x-Richtung und in einer Richtung rechtwinklig zur x-Richtung. Damit in diesem Fall der Industrieroboter R basierend auf der Teilbahn 20a die Schweißnaht 22d, die ebenfalls Teilscheißnähte 26d, 28d aufweist, zu erzeugen, wertet der Steuerrechner 5 die Daten des Sensors 7 derart aus, dass dieser auch eine Rotation des Werkstücks 21d erkennt und daraufhin die vorgegebene Teilbahn 20a entsprechend dreht. Der Anfang 24d und das Ende 29d des Spaltes werden wiederum aufgrund der erkannten Kanten 23d, 30d des Werkstücks 21d ermittelt. Auch weist das Werkstück 21d die optischen Markierungen 25, 27 auf, mittels derer der Steuerrechner 5 das Schweißgerät 6 aus bzw. ein schaltet.

In den beschriebenen Ausführungsbeispielen wird das Schweißgerät 6 als Beispiel eines vom Industrieroboter R bewegten Werkzeugs beschrieben, den der Industrieroboter R aufgrund optischer Markierungen 25, 27 der Werkstücke 21a-21d aktiviert bzw. deaktiviert, also ansteuert. Andere Werkzeuge, wie z.B. eine Vorrichtung zum Kleben, Härten, usw. sind auch möglich, wobei diese vom Industrieroboter R aufgrund erkannter optischer Markierungen angesteuert wird.

Anstelle des Aktivieren bzw. Deaktivieren des vom Industrieroboter R bewegten Werkzeugs während seiner Bewegung ist es auch möglich, das Werkzeug nach einer vorbestimmten Zeitdauer und/oder zurückgelegten Strecke, relativ zum Anfang der Bewegung, anzusteuern.

## Patentansprüche

1. Verfahren zum Steuern eines Industrieroboters (R), aufweisend folgende Verfahrensschritte:
- Bewegen eines Werkzeugs (6) mittels eines Industrieroboters (R) entlang einer Bahn, wobei das Werkzeug (6) während des Bewegens ein Werkstück (21a-21d) bearbeitet,
- während des Bewegens des Werkzeugs (6) entlang der Bahn, Erkennen einer optischen Markierung (25, 27) am Werkstück (21a-21d), und
- aufgrund der erkannten optischen Markierung (25, 27), Ansteuern des Werkzeugs (6) während des Bewegens insbesondere mittels des Industrieroboters (R).

2. Verfahren nach Anspruch 1, bei dem die optische Markierung (27, 27) eine Kerbe, eine Anreißlinie und/oder eine Bohrung in der Oberfläche des Werkstücks (21a-21d) und/oder eine zusätzliche, auf der Oberfläche des Werkstücks (21-21d) angeordnete optische Markierung ist.

3. Verfahren nach Anspruch 1 oder 2, aufweisend Erkennen der optischen Markierung (25, 27) während des Bewegens des Werkzeugs (6) mittels eines am Industrieroboter (R) oder am Werkzeug (6) angeordneten optischen Sensors (7).

4. Verfahren nach Anspruch 3, aufweisend automatisches Finden des Startpunktes (24a-24d) und/oder des Endpunktes (29a-29d) der Bahn auf dem Werkstück (21a-21d) während des Bewegens des Werkzeugs (6) durch Auswerten von mit dem optischen Sensor (7) ermittelten Daten und/oder Bildern vom Werkstück (21a-21d).

5. Verfahren nach Anspruch 4, bei dem die Bahn, auf der der Industrieroboter (R) das Werkzeug (6) bewegt, auf einer vorab festgelegte Bahn (20a) basiert, und aufweisend Verschieben, aufgrund des automatischen Findens des Startpunktes (24a-24d), den Anfang der vorab definierten Bahn (20a) auf den Startpunkt (24a-24d).

6. Verfahren nach Anspruch 4 oder 5, bei dem die Bahn, auf der der Industrieroboter (R) das Werkzeug (6) bewegt, auf einer vorab festgelegte Bahn (20a) basiert, und aufweisend
- Auswerten von vom optischen Sensor (7) stammenden, einer Naht des Werkstücks (21a-21d) zugeordneten Daten und/oder Bildern von der Naht und
- Korrigieren der vorab festgelegten Bahn (20a) aufgrund der ausgewerteten Daten und/oder Bildern, um das Werkzeug (6) entlang der Naht zu bewegen.

7. Verfahren nach Anspruch 5 oder 6, aufweisend Festlegen eines Bereichs (31), innerhalb dessen ein Abweichen von der vorab festgelegten Bahn (20a) während des Bewegens des Werkzeugs (6) erlaubt ist.

8. Industrieroboter, aufweisend:
- einen Roboterarm, der mehrere bewegbare Achsen (A) und eine Befestigungsvorrichtung (F) aufweist, die eingerichtet ist, ein zum Bearbeiten eines Werkstücks (21a-21d) vorgesehenes Werkzeug (6) aufzunehmen und mittels der Achsen (A) bewegbar ist, um das Werkzeug (6) für das Bearbeiten des Werkstücks (21a-21d) entlang einer Bahn zu bewegen, und
- einen Steuerrechner (5), der eingerichtet ist, die Achsen (A) zu bewegen, damit das Werkzeug (6) entlang der Bahn bewegt wird, wobei der Steuerrechner (5) eingerichtet ist, aufgrund einer von einem optischen Sensor (6) während des Bewegens des Werkzeugs (6) erfassten optischen Markierung (25, 27) des Werkstücks (21a-21d) das Werkzeug (6) während des Bewegens anzusteuern.

9. Industrieroboter nach Anspruch 8, bei dem die optische Markierung (27, 27) eine Kerbe, eine Anreißlinie und/oder eine Bohrung in der Oberfläche des Werkstücks (21a-21d) und/oder eine zusätzliche, auf der Oberfläche des Werkstücks (21-21d) angeordnete optische Markierung ist.

10. Industrieroboter nach Anspruch 8 oder 9, bei dem der optische Sensor (7) am Roboterarm, an der Befestigungsvorrichtung (F) oder am Werkzeug (6) angeordnet ist.

11. Industrieroboter nach einem der Ansprüche 8 bis 10, dessen Steuerrechner (5) eingerichtet ist, aufgrund von vom optischen Sensor (7) stammenden Daten und/oder Daten, die vom optischen Sender (7) erzeugten Bildern zugeordnet sind, auszuwerten, um automatisch den Startpunkt (24a-24d) und/oder den Endpunkt (29a-29d) der Bahn auf dem Werkstück (21a-21d) zu finden.

12. Industrieroboter nach Anspruch 11, dessen Steuerrechner (5) eingerichtet ist,
- eine vorab festgelegte Bahn (20a) zu speichern und die Achsen (A) derart zu bewegen, dass sich das Werkzeug (6) entlang der vorab festgelegten Bahn (20a) bewegt, und
- aufgrund des gefundenen Startpunktes (24a-24d) den Anfang der vorab definierten Bahn (20a) auf den Startpunkt (24a-24d) zu verschieben.

13. Industrieroboter nach einem der Ansprüche 8 bis 12, bei dem die Bahn, auf der der Industrieroboter (R) das Werkzeug (6) bewegt, auf einer vorab festgelegte Bahn (20a) basiert, und aufweisend
- Auswerten von vom optischen Sensor (7) stammenden, einer Naht des Werkstücks (21a-21d) zugeordneten Daten und
- Korrigieren der vorab festgelegten Bahn (20a) aufgrund der ausgewerteten Daten, um das Werkzeug (6) entlang der Naht zu bewegen.

14. Industrieroboter nach Anspruch 12 oder 13, bei dem ein Bereich (31) festgelegt ist, innerhalb dessen ein Abweichen von der vorab festgelegten Bahn (20a) während des Bewegens des Werkzeugs (6) erlaubt ist.
